# DEMANDE DE BREVET EUROPEEN

(11) **EP 4 808 128 A1**
(43) Date de publication de la demande: **16.09.2026**
(21) Numéro de dépôt: 26157598.9
(22) Date de dépôt: 10.02.2026
(51) Int. Cl.: H04N 21/2187, H04N 21/4147, H04N 21/433, H04N 21/442, H04N 21/6377, H04N 21/845

(54) **PROCÉDÉ DE GESTION DE L ACCÈS EN DIFFÉRÉ À DES SEGMENTS DE CONTENUS AYANT ÉTÉ DIFFUSÉS EN TEMPS RÉEL**

(30) Priorité: 10.03.2025 FR 2502346
(71) Demandeur: Orange, 92130 Issy-les-Moulineaux (FR)
(72) Inventeur: GASTE, Olivier, 92326 Chatillon (FR); MARCHAND, Hervé, 92326 Chatillon (FR)

(57) **Abrégé**

L'invention se rapporte à un procédé de gestion du stockage de segments d'un contenu multimédia, le contenu multimédia étant diffusé depuis un serveur de diffusion (SRV) via un réseau de communication, le dispositif de lecture (STB) comprenant une mémoire (MEM1) pour stocker des segments avant une lecture des segments, caractérisé en ce que les segments sont conservés en mémoire (MEM1) après lecture.

## Description

### Domaine technique

Le domaine de l'invention est celui de la gestion du stockage d'un contenu en cours de diffusion en vue d'une lecture en différée par un dispositif de lecture.

Le dispositif de lecture vise tous les dispositifs de traitement de données équipés de processeurs capables de recevoir et de lire ou relire un contenu diffusé depuis un serveur de contenus.

Un tel dispositif de lecture est par exemple un décodeur de télévision numérique.

Le contenu visé ici est un contenu multimédia. Ce contenu est par exemple un contenu télévisé.

### Etat de la technique

Lors d'un accès à un contenu multimédia, un dispositif de lecture émet une requête à destination d'un serveur de contenus en indiquant un contenu multimédia (vidéo et/ou audio) choisi. Le dispositif de lecture reçoit en retour un flux de données numériques relatif à ce contenu.

Les données reçues sont ensuite décodées par le dispositif de lecture, puis restituées sous la forme d'un affichage de lu contenu multimédia correspondant.

Le serveur de contenus peut transmettre un contenu de plusieurs manières à savoir en mode multicast (par exemple IPTV), en mode unicast, etc. Après réception du contenu, le dispositif de lecture décode le contenu et requiert une restitution sur un dispositif de restitution.

Une diffusion d'un contenu vidéo « En Direct » en HTPT Adaptive Streaming (HAS) permet de diffuser une vidéo en mode OTT en proposant la meilleure qualité possible à l'utilisateur en fonction de la bande passante disponible sur le réseau. Cette diffusion s'appuie sur un échange d'un fichier de description (aussi appelé « manifest » par l'homme du métier) entre un serveur de diffusion de contenu HAS et un dispositif de lecture client. Ce fichier de description décrit (sous forme d'URLs), pour des flux Live, les derniers segments vidéo qui ont été produits. Ces segments ont généralement tous une durée identique (par exemple 2 secondes).

Outre la lecture de contenus, certains dispositifs de lecture offrent une fonction appelée « Start Over » par l'homme du métier (ou « rattrapage » ou « lire depuis le début ») qui permet à un utilisateur, par exemple lorsqu'il regarde un contenu diffusé en temps réel (chaîne diffusée en « Live »), de relire en différé une partie du contenu qui a été diffusé en Live ; cette fonction permet notamment de relire un contenu depuis un instant souhaité, par exemple depuis son début. Par exemple, si un film diffusé en temps réel débute à 21h00 et que l'utilisateur accède au flux Live correspondant en zappant sur la chaine à 21h40, l'utilisateur peut demander, en sélectionnant une commande liée à la fonction dite de rattrapage, à ce que la lecture du contenu reprenne par exemple depuis un instant souhaité par exemple 21h15, voire depuis le début du film à savoir 21h. Dans ce cas, on passe d'un mode de lecture en temps réel à un mode de lecture en différée.

Afin de permettre à un utilisateur de revenir sur des émissions diffusées depuis plusieurs heures, les fichiers de description qui sont transmis successivement depuis le serveur décrivent non seulement les derniers segments audio/vidéo produits correspondant au direct mais aussi tous les segments enregistrés depuis plusieurs heures (quatre heures par exemple) et accessibles en mode startover. On constate alors une augmentation très significative de la taille du fichier de description passant d'une taille de l'ordre de 12ko (description de 30 segments de 2 secondes) pour du « direct » à une taille de l'ordre de 2.8Mo (description de 7200 segments de 2 secondes) pour 4 heures de description de segments. Cette augmentation de la taille du fichier de description nécessite une consommation de bande passante qui devient non négligeable surtout pour les utilisateurs en ADSL et également une durée de transmission plus longue du fait de sa taille plus important et des temps de parsing importants qui peuvent pénaliser la fluidité de l'interface graphique.

L'invention vient améliorer la situation.

### L'invention

A cet effet, selon un aspect fonctionnel, l'invention se rapporte à un procédé de gestion du stockage de segments d'un contenu multimédia, le contenu multimédia étant diffusé depuis un serveur de diffusion via un réseau de communication, le dispositif de lecture comprenant une mémoire pour stocker des segments avant une lecture des segments, caractérisé en ce que les segments sont conservés dans la mémoire après lecture.

Contrairement à l'état de la technique, dans lequel les segments mémorisés sont uniquement des segments temps réel correspondant au direct, l'invention propose de mémoriser dans la mémoire du dispositif de lecture en outre des segments qui ont été lus afin de permettre un accès en local à des segments en différé.

En d'autres mots, un espace mémoire (buffer) est dédié, dans la mémoire du dispositif de lecture, aux segments audio / vidéo qui sont à lire comme dans l'état de la technique ; et également un espace mémoire (buffer) audio / vidéo, encore une fois dans le dispositif de lecture ou plus généralement associé au dispositif de lecture localement, de segments qui ont été lus par le dispositif de lecture. Ce dernier espace mémoire correspond à un « buffer de conservation » apte à conserver en mémoire des segments lus au lieu de les supprimer après lecture comme dans l'état de la technique. On verra que la taille (ou profondeur) de ce buffer de conservation (donc de segments déjà lus) peut être soit de taille fixe (par exemple 30 secondes ce qui permet de faire 3 sauts dans le passé de 10 secondes) soit de taille dynamique en fonction de la mémoire disponible sur l'équipement.

La durée de conservation est assez courte du fait de la taille de la mémoire qui est souvent limitée. L'invention est donc utile lorsque la lecture en différée concerne des segments de contenu relativement récents.

En définitive, la lecture de segments en différé s'effectue en local contrairement à l'état de la technique qui nécessite, suite à une demande de lecture en différée, de télécharger des fichiers de description décrivant les segments concernés et de télécharger les segments concernés depuis le réseau de communication.

Selon un mode de réalisation, la conservation des segments en mémoire est réalisée sur une durée donnée. Ce mode permet de limiter la quantité de données stockées dans l'espace mémoire dédié aux segments stockés après lecture par le dispositif de lecture.

Selon un autre mode qui pourra être mis en œuvre alternativement ou cumulativement avec les précédents modes, les segments diffusés sont mémorisés dans une mémoire associée au serveur, et une lecture en différée comprend une lecture de segments conservés ou une lecture depuis la mémoire associée au serveur. Ce mode permet de lire le contenu en différé indifféremment les segments concernés depuis une mémoire locale du dispositif de lecture ou depuis une mémoire distante associée au serveur de diffusion. Dans le cas où le stockage dans la mémoire des segments lus est limité à une durée donnée précédent l'instant courant de diffusion, ce mode permet de lire des segments depuis le serveur lorsque les segments concernés ne sont plus stockés dans l'espace mémoire concerné du dispositif de lecture.

Selon une variante de ce dernier mode, l'origine des segments à lire en différé est fonction de l'instant de lecture en différé souhaité. Selon ce mode, la lecture des segments peut être réalisée depuis le serveur ou en local dans le dispositif de lecture, l'instant de lecture sélectionné étant pris en compte pour faire ce choix. Par exemple, en considérant que les segments qui ont été lus sont mémorisés en mémoire sur une durée donnée précédant l'instant courant de lecture, si l'instant de lecture souhaité est dans cette plage temporelle, la mémoire du dispositif de lecture est utilisée ; si l'instant de lecture souhaité n'est dans cette plage temporelle, la mémoire du serveur est utilisée. Le mode précédent ne se limite pas à cette variante ; même si l'instant de lecture en différée vise des segments stockés dans la mémoire stockant des segments lus, rien n'empêche de prévoir une lecture des segments stockés dans la mémoire associée au serveur.

Il est connu qu'un accès à des segments requiert de la part du dispositif de lecture une réception préalable de fichiers de description successifs. Selon un autre mode qui pourra être mis en œuvre alternativement ou cumulativement avec les précédents, la réception des fichiers de description cesse pendant la lecture de segments conservés en mémoire. Ce mode évite de recevoir des fichiers de description inutilement ; cela permet de gagner en bande passante.

Selon une variante du mode précédent, le procédé comprend une reprise de la réception des fichiers de description après lecture de segments conservés. Cette variante permet d'assurer une reprise de la réception des fichiers de description et donc une poursuite en continue de la lecture du contenu lorsque les segments à lire ne sont plus dans la mémoire cache mémorisant les segments lus.

Selon un autre mode qui pourra être mis en œuvre alternativement ou cumulativement avec les précédents modes, les segments sont conservés dans une mémoire cache. Ce mode permet de lire plus rapidement la lecture de segments, ces derniers étant décodés et prêts à être lus.

Selon un premier aspect matériel, l'invention se rapporte à une entité de gestion du stockage de segments d'un contenu multimédia, le contenu multimédia étant diffusé depuis un serveur de diffusion via un réseau de communication, le dispositif de lecture comprenant une mémoire pour stocker des segments avant une lecture des segments, caractérisé en ce qu'elle comprend un module de conservation apte à conserver des segments dans la mémoire après lecture.

Selon un autre aspect matériel, l'invention se rapporte à un dispositif de lecture comprenant une entité de gestion telle que définie ci-dessus.

Selon un autre aspect matériel, l'invention a pour objet un programme d'ordinateur apte à être mis en œuvre sur une entité de gestion telle que définie ci-dessus, le programme comprenant des instructions de code qui, lorsqu'il est exécuté par un processeur, réalise les étapes du procédé de gestion définies ci-dessus.

Selon un autre aspect matériel, l'invention a pour objet un support de données sur lequel a été mémorisée au moins une série d'instructions de code de programme pour l'exécution d'un procédé de gestion tel que défini ci-dessus.

Le support visé ci-dessus peut être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique, par exemple un disque dur. D'autre part, un support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
[Fig 1] représente un système informatique dans lequel l'invention peut être mise en œuvre.
[Fig 2] illustre de façon schématique la structure matérielle d'un serveur apte à transmettre des fichiers de description ;
[Fig 3] illustre de façon schématique la structure matérielle d'un dispositif de lecture apte à lire des flux multimédias en temps réel ;
[Fig 4] illustre un mode de réalisation du procédé de l'invention. Cette figure 4 illustre deux états de stockage des espaces mémoires dont un espace qui mémorise les segments reçus et les lire lorsqu'ils sont suffisants en nombre et un espace mémoire qui conserve les segments lus au lieu de les effacer.

### Description détaillée de modes de réalisation de l'invention

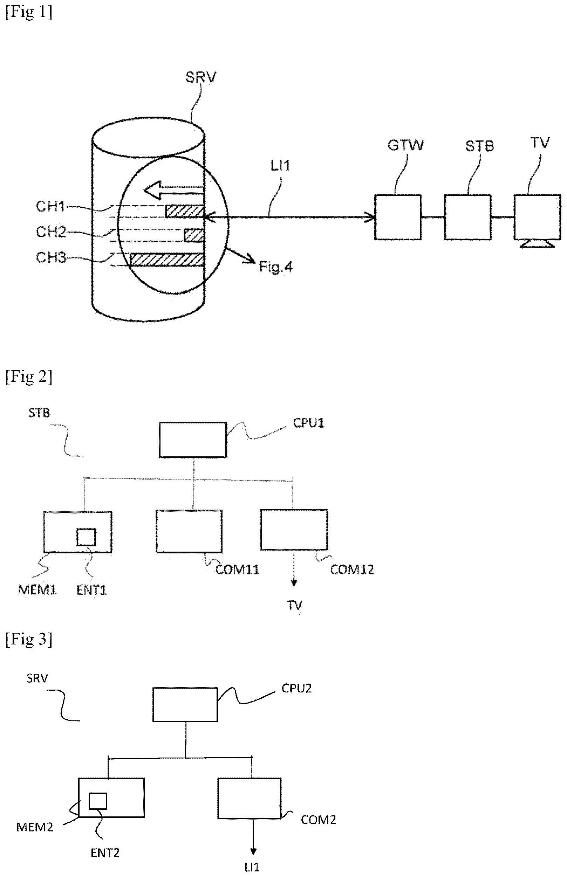

La figure 1 représente un système informatique SYS dans lequel est mis en œuvre un réseau de diffusion de contenus appelé CDN (Content Distribution Network) par l'homme du métier depuis lequel sont transmis des contenus à destination de dispositifs clients, ici des dispositifs de lecture de contenus, et des fichiers de description associés aux contenus multimédias. Le serveur de diffusion de contenus, appelé dans le présent texte, serveur de contenus diffuse sur plusieurs canaux de diffusion associés à des chaînes de télévision.

Dans notre exemple, à des fins de simplification de l'exposé, le système SYS comprend un seul dispositif de lecture STB. Cependant l'invention s'applique à un nombre quelconque de dispositifs de lecture, le principe de l'invention pouvant être mis en œuvre sur tout ou partie des dispositifs de lecture STB.

Le dispositif de lecture STB est par exemple un dispositif de lecture numérique tel qu'un décodeur.

Le contenu multimédia visé ici est un contenu vidéo d'une chaîne de télévision. Ce contenu est diffusé depuis un serveur qui diffuse des programmes télévisés dits Live, c'est-à-dire diffusés en temps réel.

Dans notre exemple, le dispositif de lecture STB est connecté à un terminal de restitution TV tel qu'une télévision. Le dispositif peut transmettre des données à restituer au dispositif de restitution TV.

Dans notre exemple, le dispositif de lecture STB est connecté sur un port du dispositif de restitution TV ; le dispositif de lecture STB et le dispositif de restitution TV pourrait aussi former un seul et unique dispositif.

Dans notre exemple, le dispositif de lecture STB est situé dans un réseau local LAN (sigle anglosaxon de « Local Area Network ») géré par une passerelle domestique GTW.

La passerelle GTW est apte à communiquer via une liaison de communication LI1 qui peut être un réseau de télécommunication tel qu'un réseau étendu WAN connu de l'homme du métier.

Dans notre exemple, le système informatique SYS met en œuvre un réseau de diffusion de contenus appelé CDN (Content Distribution Network) par l'homme du métier depuis lequel des contenus sont transmis à destination de dispositifs de lecture de contenus STB.

Le réseau CDN est constitué de serveurs reliés en réseau dans le réseau étendu ; ces serveurs coopèrent afin de mettre des contenus multimédias à disposition des utilisateurs. Afin de simplifier l'exposé de l'invention, un seul serveur de contenus SRV sera représenté sur la figure 1 pour représenter le CDN. Le serveur de contenus SRV se trouve, dans notre exemple, dans le réseau étendu WAN.

Le serveur de contenus SRV reçoit par exemple des chaînes de contenus de télévision numérique en provenance d'un réseau de télévision diffusée (non représenté), et les met à disposition en temps réel à des terminaux clients, ici le dispositif de lecture STB, via des canaux de diffusion.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou une mémoire cache intégrée au processeur CPU1. Le terme comprendre vise à la fois le fait que les mémoires sont inclues dans le dispositif de lecture STB mais vise aussi le cas ù les mémoires sont hors du dispositif de lecture STB mais connectées via un lien local avec tout ou partir de ces mémoires MEM1 ; une mémoire connectée en local est par exemple un disque dur relié via un port USB.

Le dispositif de lecture STB peut transmettre un contenu à restituer au dispositif de restitution TV via un module de communication COM12. Ce module COM12 est par exemple une liaison HDMI.

Le dispositif de lecture STB communique avec la passerelle via un module Ethernet pour une communication locale avec fils ou via un module radio de type Wi-Fi pour une communication locale sans fils avec la passerelle résidentielle GTW. Le module en question est référencé CMO11 sur la figure 2.

Dans notre exemple, le dispositif de lecture STB comprend un module de téléchargement en mode streaming HAS (http Adaptative Streaming), non représenté, apte à gérer le téléchargement de segments du contenu lorsque le contenu est transmis sur le réseau LI1 sous forme de segments conformément à la technique dite de streaming adaptatif connu de l'homme du métier.

Rappelons brièvement ici que lorsqu'un utilisateur accède à un flux Live diffusé en http Adaptative Streaming (HAS), le dispositif de lecture STB reçoit à intervalle régulier, en général toutes les deux secondes, des fichiers de description successivement, appelés ci-après fichiers de description temps réels, qui décrivent chacun généralement les soixante dernières secondes du flux (30 segments de 2 secondes) en fournissant des adresses de type URLs de segments correspondant à ces soixante dernières secondes. Grâce aux adresses de segments reçues, le dispositif de lecture STB peut télécharger les segments et les lire les uns après les autres.

En référence à la figure 3, le serveur SRV est également équipé d'au moins un processeur CPU2 pour la réalisation de traitement informatique. et de mémoires MEM2 pour le stockage des segments produits et téléchargeables.

Le serveur SRV communique avec la passerelle GTW via réseau WAN. Le serveur comprend, un module de communication référencé COM2 pour la communication avec le réseau WAN.

Il arrive parfois de manquer le début d'un programme télévisé (film, série, etc.) diffusé en temps réel, ou de souhaiter relire un contenu depuis un instant donné. Une fonction appelée « lire du début » ou « rattrapage » (appelée également « Start Over » ou « Restart » par l'homme du métier) permet de reprendre, à tout moment, le programme en cours de diffusion à un instant antérieur à l'instant courant ; par exemple, la lecture du contenu peut être reprise depuis son commencement, ou depuis un instant choisi par un utilisateur. Par exemple, si un film débute à 21h00 et si l'utilisateur zappe sur la chaine à 21h40, il peut demander à ce que la lecture du contenu reprenne depuis le début du film. Dans ce cas, on passe d'un mode de lecture à un contenu en temps réel à un mode de lecture en différée.

Afin de permettre un accès en différé à un contenu, une entité ENT2 présente sur le serveur SRV mémorise les parties de contenu ayant été diffusées. Dans notre exemple, les parties sont des segments de contenu. Les segments ayant été diffusés sont enregistrés en mémoire MEM2 juste après leurs diffusions respectives ; les segments enregistrés sont accessibles ensuite pour une lecture en différée.

Dans notre exemple, pour ne pas mémoriser indéfiniment tous les segments diffusés, les parties de contenu sont mémorisées dans la mémoire MEM2 du serveur SRV pendant une certaine durée. Des fichiers de description sont créés en conséquence et incluent non seulement
- les adresses des derniers segments produits pour un accès aux derniers segments produits
- mais aussi les adresses des segments mémorisés ;

Les fichiers de description résultants sont ensuite mis à disposition du dispositif de lecture STB pour pouvoir accéder aux segments en les téléchargeant grâce aux adresses URL incluses dans ces fichiers.

A noter que, afin d'éviter un stockage énorme de segments en mémoire MEM2, les segments ayant été diffusés sont généralement stockés dans la mémoire du serveur sur une plage temporelle donnée précédant l'instant courant de diffusion de diffusion. Des traits hachurés sur la figure 1 illustre en liaison avec différents canaux de diffusion CH1 à CH3, un stockage des segments ayant déjà été diffusés accessibles en différés ; dans notre exemple, seuls les programmes télévisés non terminés sont enregistrés en mémoire pour un accès en lecture différé ; les profondeurs de mémoire (longueurs des bandes hachurées) diffèrent donc sur la figure 1 du fait d'instants de démarrages différents sur les différents canaux CH1-CH3.

Selon l'invention, une entité de gestion ENT1 gère le stockage des segments en mémorisant dans un espace mémoire du dispositif de lecture STB les segments après leurs lectures respectives. Dans notre exemple, les segments sont mémorisés dans un espace de la mémoire cache ; ces segments sont décodés et prêts à être lu. L'invention ne se limite pas à cet exemple, les segments pourraient aussi être enregistrés suite à la réception avant décodage.

Contrairement à l'état de la technique dans lequel les segments mémorisés en mémoire cache sont uniquement au derniers segments diffusés (segments temps réel correspondant au direct), l'invention propose de mémoriser en outre dans un espace mémoire C2 du dispositif de lecture STB des segments suite à leurs lectures par le dispositif de lecture STB de manière à accéder si besoin en différé à ces segments directement depuis l'espace mémoire concerné.

En d'autres mots, un espace C1 de la mémoire cache du dispositif de lecture STB est dédié aux segments audio / vidéo qui sont à lire comme dans l'état de la technique ; et un espace C2 de la mémoire cache est dédiée aux segments audio/vidéo qui ont été lus qui, ce dernier espace C2 correspondant à un « buffer de conservation » de segments lus.

La profondeur de l'espace mémoire C2 (le buffer de conservation), donc de segments déjà lus, peut être soit de taille fixe (par exemple 30 secondes également ce qui permet de faire 3 sauts dans le passé de 10 secondes) soit de taille dynamique en fonction de la mémoire disponible sur l'équipement.

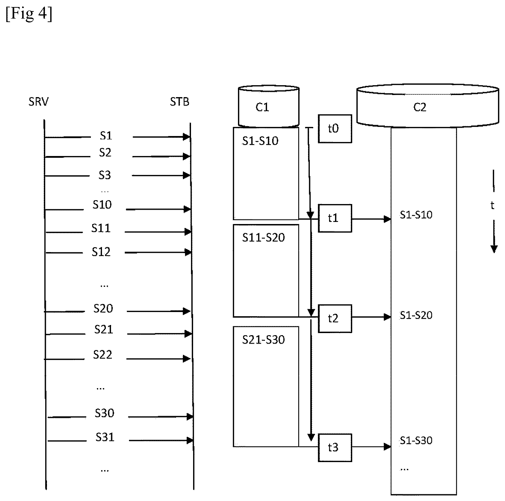

La figure 4 décrite ci-dessous va permettre d'illustrer schématiquement un mode de réalisation possible.

On suppose ici que le serveur SRV met à disposition une liste de contenus issus de canaux de diffusion de chaînes de télévision respectives.

Cette figure 4 comprend deux axes associés au serveur SRV et au dispositif de lecture STB.

La figure 4 fait aussi apparaître les deux espaces mémoires C1 et C2 de associées au dispositif de lecture STB introduites ci-dessus ; rappelons que l'un des espaces C1 est dédié à la mémorisation de segments associés au flux temps réel, l'autre espace C2 est dédié à des segments qui ont été lus et mémorisés pour être accessibles en différé depuis cette deuxième mémoire. Dans notre exemple, ces deux espaces sont des espaces d'une mémoire cache.

On suppose aussi dans notre exemple que les segments créés et diffusés au niveau du serveur SRV sont mémorisés comme expliqué ci-dessus dans la mémoire MEM2 du serveur. Les segments sont donc aussi accessibles en différé depuis cette mémoire MEM2.

En définitive, l'invention offre une lecture en différée de segments, la lecture étant issue soit de segments mémorisés en local stockés dans l'espace de conservation C2 associé au dispositif de lecture STB, soit de segments mémorisés dans la mémoire MEM2 du serveur SRV décrite ci-dessus.

Une fonction appelée « start over » par l'homme métier permet de lire des segments mémorisés depuis la mémoire MEM2 et lire le contenu en différé.

L'entité ENT1 va donc gérer le mode de fonctionnement de la fonction « start over » en requêtant les segments soit dans la mémoire MEM2 soit dans l'espace mémoire C2.

Un axe temporel « t » est aussi représenté sur cette figure 4.

On suppose que, à un instant t0, un accès en lecture d'un canal CH1 est demandé par le dispositif de lecture STB au serveur SRV. Une requête d'accès (non représentée sur la figure car sans intérêt pour l'exposé.) est transmise du dispositif de lecture STB à destination du serveur SRV.

Suite à la réception de la requête, le serveur SRV transmet successivement des fichiers de description décrivant des ensembles de description de segment incluant des URL d'accès aux segments.

Le dispositif de lecture STB reçoit les fichiers successivement, lit ces fichiers de descriptions et télécharge les segments décrits en utilisant les URLs incluses dans les fichiers de description les uns après les autres.

Dans notre exemple, les segments S1 à S10 sont reçus successivement.

Les segments sont mémorisés dans la première mémoire cache référencée C1.

Les segments sont ensuite décodés et lus par le dispositif de lecture STB les uns après les autres et restitués sur le dispositif de restitution TV.

Selon l'invention, après réception depuis le réseau, les segments reçus S1-S10 sont mémorisés dans l'espace C1 du dispositif de lecture STB. ; En outre, l'entité ENT1, après lecture des fichiers, mémorise les segments lus dans l'espace mémoire C2 pour pouvoir être relus en différé ultérieurement. En d'autres mots, le dispositif de lecture STB comprend un espace mémoire C2 mémorisant les segments lus par le dispositif de lecture STB.

On voit sur la figure 4 plusieurs phases de traitement de groupe de segments (S1-S10, S11-S20, S21-S30) :
- les segments S1 à S10 sont, après réception depuis le réseau, mémorisés dans le premier espace mémoire C1 de l'instant t0 à t1, et effacés de ce premier espace mémoire C1 après lecture de ces segments par le dispositif de lecture STB. A l'instant t1 décrit ci-dessus, après lecture du segment S10, les segments S1 à S10 ayant été lus, ces derniers sont transférés dans le deuxième espace mémoire cache C2.
- La lecture du contenu se poursuivant, les segments S11 à S20 sont ensuite mémorisés successivement dans le premier espace mémoire C1 de l'instant t1 à t2, et effacés de ce premier espace mémoire C1 après lecture de ces segments par le dispositif de lecture STB. A l'instant t2, après lecture du segment S20, les segments S11 à S20 ayant été lus, ces derniers sont transférés vers l'espace mémoire C2 et ajoutés aux segments S1 à S10 déjà présents dans l'espace mémoire C2. A ce stade, l'espace mémoire C2 comprend les segments S1 à S20.
- La lecture du contenu se poursuivant, les segments S321 à S30 sont ensuite mémorisés dans le premier espace mémoire C1 de l'instant t2 à t3, et effacés de ce premier espace mémoire C1 après lecture de ces segments par le dispositif de lecture STB. A l'instant t3, après lecture du segment S30, les segments S21 à S30 ayant été lus, ces derniers sont transférés vers l'espace mémoire C2 et ajoutés aux segments S1 à S20 déjà présents dans l'espace mémoire C2. A ce stade, l'espace mémoire C2 comprend les segments S1 à S30.

Il est évident que si le contenu comprend plus de segments, le procédé décrit ci-dessus se poursuit pour les segments concernés.

Les segments conservés dans l'espace mémoire C2 ne sont pas conservés indéfiniment du fait de la taille mémoire de cet espace C2 limitée en kilo-octets. Pour cette raison, la conservation a une durée limitée choisie selon les besoins et/ou la taille et/ou la puissance des ressources du dispositif de lecture STB. Comme indiqué ci-dessus, la profondeur de cette mémoire de conservation (donc de segments déjà lus) peut être soit de taille fixe (par exemple 30 secondes également ce qui permet de faire 3 sauts dans le passé de 10 secondes) soit de taille dynamique en fonction de la mémoire disponible sur l'équipement.

On suppose ensuite que, au cours de lecture en direct, une demande d'accès en différé est reçue par le dispositif de lecture STB. Cette requête est, par exemple, issue d'une télécommande manipulée par un utilisateur. Dans ce cas, dans notre exemple, l'entité ENT1 vérifie la présence des segments demandés dans le deuxième espace C2 ; dans l'affirmative, l'entité ENT1 requiert une lecture des segments depuis ce deuxième espace mémoire C2 (la mémoire de conservation) afin de lire en différé les segments. A ce stade la lecture en différée des segments s'effectue à la base des segments stockés dans le deuxième espace mémoire C2 ; les segments sont lus les uns après les autres.

Les segments sont généralement codés et font l'objet d'un décodage dans le dispositif de lecture STB avant d'être lus. On remarquera ici que les segments stockés dans le deuxième espace mémoire C2 sont des segments ayant été lus qui ont été décodés. On comprend donc que la lecture depuis le deuxième espace C2 s'effectue sans nécessiter de décodage des segments ces derniers ayant été déjà été décodés. La lecture des segments depuis ce deuxième espace s'effectue donc rapidement car ne nécessite pas de décodage.

En outre, le deuxième espace mémoire C2 fait partie d'une mémoire cache. Les segments dans l'espace mémoire C2 sont prêts à être lus. La lecture depuis le deuxième espace C2 est donc plus simple qu'un accès à distance ; les traitements sont simplifiés, le processeur du dispositif de lecture STB est donc moins sollicité.

Le mode de réalisation décrit ci-dessus peut faire l'objet de variantes dont les suivantes.

Selon une variante possible, l'entité ENT1 requiert un arrêt de la réception des fichiers de description lors de la lecture de segments depuis le deuxième espace mémoire C2. Il s'ensuit que le dispositif de lecture STB ne reçoit plus de fichiers de description lors de la lecture de segments dans le deuxième espace C2.

Selon une autre variante, l'entité ENT1 peut aussi poursuivre la réception des fichiers de description en parallèle ; cela peut être utile par « exemple si l'accès au deuxième espace C2 est défaillant, une lecture n'étant plus possible depuis cet espace ; la réception en parallèle de fichiers de description permet de requérir un téléchargement des segments.

Selon une autre variante, suite à la demande d'arrêt, l'entité ENT1 peut requérir une reprise du téléchargement des fichiers de description.

L'arrêt et la reprise peuvent être demandés à un moment opportun, ce dernier étant idéalement choisi de telle sorte que la lecture des segments soient continue et donc sans interruption.

La reprise de la réception des fichiers de description peut être prévue après lecture de tous les segments stockés dans la deuxième mémoire cache C2 ; Cette reprise peut aussi être prévue à un autre moment, par exemple avant la lecture des derniers stockés dans la deuxième mémoire cache C2, ce de manière à anticiper le passage de la lecture des segments depuis C2 vers la lecture des segments téléchargés depuis le serveur SRV.

On comprend que la lecture en différée peut-être réalisée sur une période assez courte, par exemple de trente secondes comme expliqué ci-dessus. De manière à pouvoir lire en différé des segments situés au-delà des trente secondes, l'entité de gestion ENT1 est apte à évaluer la nécessité de lire des segments dans le deuxième espace C2 ou de lire un fichier de description décrivant des segments situés plus anciens situés à plus de trente secondes dans le passé. Pour cela, l'entité ENT1 reçoit la requête et selon la lecture différée souhaitée
- soit l'entité requiert une lecture des segments dans le deuxième espace C2 si les segments sont enregistrés dans ce deuxième espace C2,
- soit requiert un téléchargement des segments depuis la mémoire MEM2 du serveur lorsque par exemple les segments demandés sont plus anciens que ceux mémorisés dans le deuxième espace mémoire C2.

Précisons enfin ici aussi ici que le terme « entité » ou « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion du stockage de segments d'un contenu multimédia, le contenu multimédia étant diffusé depuis un serveur de diffusion (SRV) via un réseau de communication, le dispositif de lecture (STB) comprenant une mémoire (MEM1) pour stocker des segments avant une lecture des segments, **caractérisé en ce que** les segments sont conservés dans la mémoire (MEM1) après lecture.

2. Procédé de gestion selon la revendication 1, **caractérisé en ce que** la conservation des segments en mémoire est réalisée sur une durée donnée.

3. Procédé de gestion selon la revendication 1 ou 2, **caractérisé en ce que** les segments diffusés sont mémorisés dans une mémoire associée au serveur, et **en ce qu'**une lecture en différée comprend une lecture de segments conservés ou une lecture depuis la mémoire associée au serveur.

4. Procédé de gestion selon la revendication 3, **caractérisé en ce que** l'origine des segments à lire en différé est en fonction de l'instant de lecture en différé souhaité.

5. Procédé de gestion selon la revendication 3, **caractérisé en ce qu'**un accès à des segments requiert une réception de fichiers de description successifs et **en ce que** la réception des fichiers de description cesse pendant la lecture de segments conservés en mémoire.

6. Procédé de gestion selon la revendication 5, **caractérisé en ce qu'**il comprend une reprise de la réception des fichiers de description après lecture de segments conservés.

7. Entité de gestion (ENT1) de gestion du stockage de segments d'un contenu multimédia, le contenu multimédia étant diffusé depuis un serveur de diffusion (SRV) via un réseau de communication, le dispositif de lecture (STB) comprenant une mémoire (MEM1) pour stocker des segments avant une lecture des segments, **caractérisé en ce qu'**elle comprend un module de conservation apte à conserver dans la mémoire (MEM1) des segments après lecture.

8. dispositif de lecture (STB) comprenant une entité de gestion (ENT1) telle que définie dans la revendication 7.

9. Programme d'ordinateur apte à être mis en œuvre sur une entité de gestion (ENT1) telle que définie dans la revendication 7, le programme comprenant des instructions de code qui, lorsqu'il est exécuté par un processeur, réalise les étapes du procédé définies dans la revendication 1.

10. Support de données sur lequel a été mémorisée au moins une série d'instructions de code de programme pour l'exécution d'un procédé selon la revendication 1.
